# EUROPÄISCHE PATENTSCHRIFT

(11) **EP 3 477 829 B1**
(45) Veröffentlichungstag und Bekanntmachung des Hinweises auf die Patenterteilung: **02.08.2023**
(21) Anmeldenummer: 17198073.3
(22) Anmeldetag: 24.10.2017
(51) Int. Cl.: H02K 11/40, F04D 25/06

(54) **RADIALLÜFTER MIT EINEM AUSSENLÄUFERMOTOR**
RADIAL FAN WITH AN OUTER ROTOR MOTOR
VENTILATEUR RADIAL DOTÉ D'UN MOTEUR À ROTOR EXTÉRIEUR

(43) Veröffentlichungstag der Anmeldung: 01.05.2019
(73) Patentinhaber: ZKW Group GmbH, 3250 Wieselburg (AT)
(72) Erfinder: Haas, Erik, 3203 Rabenstein an der Pielach (AT); Mayer, Peter, 3371 Neumarkt an der Ybbs (AT); Füreder, Andreas, 3241 Kirnberg an der Mank (AT)
(74) Vertreter: Patentanwaltskanzlei Matschnig & Forsthuber OG

(56) Entgegenhaltungen:
- EP-A2- 1 154 546
- WO-A1-2015/197574
- WO-A2-2013/098309
- DE-A1- 10 158 963
- DE-A1-102013 108 506
- DE-U1-202009 006 871

## Beschreibung

Die Erfindung bezieht sich auf einen Radiallüfter mit einem Außenläufermotor und einem Gehäuse, welcher aufweist: einen Stator mit einem mehrere Polschuhe und Statorwicklungen umfassenden Anker, einen Rotor, welcher den Stator von außen umfasst und der Permanentmagnete und außen liegenden Lüfterflügel sowie eine in dem Stator drehbar gelagerte Rotorwelle besitzt, und eine in Abstand von den Statorwicklungen angeordnete Leiterplatte für eine Ansteuerschaltung des Außenläufermotors vorgesehen ist, von welcher Anschlussleitungen zu den Statorwicklungen führen, wobei zumindest eine elektrisch leitende Verbindung von dem elektrisch leitfähigen Anker des Stators zu zumindest einem Anschluss der Leiterplatte geführt ist und dieser Anschluss mit einem festen Potential verbunden ist.

Lüfter dieser Art, wie beispielsweise in dem Dokument DE 10 2013 108506 A1 beschrieben, sind beispielsweise in Scheinwerfern von Kraftfahrzeugen eingebaut, um vor allem die verwendeten Leuchtmittel, wie LEDs oder Laserdioden und /oder deren elektronische Ansteuerungen zu kühlen. Die Ankerwicklungen der Außenläufermotoren solcher Lüfter werden üblicherweise über eine geeignete Schaltung auf der Leiterplatte angesteuert, wobei die Ansteuerungsströme oft steilflankig sind und dementsprechend elektromagnetische Störungen erzeugen, welche andere Komponenten schädlich beeinflussen können. Aus diesem Grund und auch wegen bestehender Vorschriften müssen abgestrahlte Störungen auf möglichst geringe Werte beschränkt werden.

Das Dokument DE 20 2009 006871 U zeigt bei einem Außenläufermotor ein elektrisch leitendes Kontaktelement, das von dem elektrisch leitfähigen Anker des Stators zu zumindest einem Anschluss der Leiterplatte geführt ist, wobei dieser Anschluss mit einem festen Potential verbunden ist. Das Kontaktelement kann ein stiftförmiges oder kabelartiges ausgebildet sein und wird mit einem elektrischen Anschluss durch Löten, Schweißen, Kleben oder Stanzen verbunden.

Diese Art der Verbindung bedingt einen zusätzlichen, unerwünschten Aufwand bei der Produktion bzw. dem Zusammensetzen eines solchen Motors.

Bei einer elektrischen Maschine nach der WO 2015/197574 A1 ist zur Abschirmung von Störstrahlung, die aufgrund einer verwendeten Pulsweitenmodulation auftritt, eine Abschirmplatte vorgesehen, die zur Kontaktierung mit dem Stator über ein Kontaktelement verbunden ist. Die Schirmplatte stellt ein zusätzliches Element des Motors dar, das bei der Herstellung und dem Zusammenbau des Motors zu berücksichtigen ist.

Es liegt nahe, einen Störer als solchen völlig zu schirmen, doch ist dies gerade bei einem Lüfter nicht realisierbar, wozu erschwerend hinzukommt, dass viele Lüfter teilweise oder zu großen Teilen aus nichtleitendem Kunststoff bestehen.

Es ist daher eine Aufgabe der Erfindung, bei einem Radiallüfter der gegenständlichen Art eine Lösung zu finden, welche von dem Motor ausgehende Störstrahlung so gut wie möglich verringert, wobei außerdem der Zusammenbau des Motors einfach erfolgen kann und keine zusätzlichen Teile, wie eine Schirmplatte, erforderlich sind, und der Zusammenbau ohne zusätzlichen Klebe- oder Lötverbindungen erfolgen kann.

Diese Aufgabe wird mit einem Radiallüfter der eingangsgenannten Art erfindungsgemäß dadurch gelöst, dass die elektrisch leitende Verbindung als federndes Element ausgebildet ist, dessen eines Ende mit dem Anker oder einem Anschluss der Leiterplatte fest verbunden ist und dessen anderes Ende federnd gegen einen Anschluss der Leiterplatte oder den Anker gepresst ist.

Bei einer zweckmäßigen Ausbildung der Erfindung kann vorgesehen sein, dass das federnde Element als Blattfeder ausgebildet ist.

Gemäß einer anderen vorteilhaften Weiterbildung der Erfindung kann das federnde Element als leitende Spiralfeder ausgebildet sein.

### Fortsetzung ursprüngliche Seite 2

Dabei ist es in vielen Fällen zweckmäßig, wenn das feste Potential der Ansteuerschaltung Massepotential ist.

In anderen Fällen kann mit Vorteil vorgesehen sein, dass das feste Potential der Ansteuerschaltung ein Pol der Versorgungsspannung ist.

Eine weitere oft zweckmäßige Variante der Erfindung, die eine oft unerwünschte galvanische Verbindung vermeidet, sieht vor, dass der elektrisch leitfähige Anker des Stators über einen Kondensator mit Massepotential und/oder der Betriebsspannung verbunden ist.

Erfindungsgemäß ist die elektrisch leitende Verbindung als federndes Element ausgebildet, dessen eines Ende mit dem Anker oder einem Anschluss der Leiterplatte fest verbunden ist und dessen anderes Ende federnd gegen einen Anschluss der Leiterplatte oder den Anker gepresst ist.

Falls der Rotor und/oder das Gehäuse zumindest abschnittsweise aus Kunststoff besteht, zeigt sich die Erfindung besonders wirksam.

Die Erfindung samt weiteren Vorteilen ist im Folgenden an Hand beispielsweiser Ausführungsformen näher erläutert, die in der Zeichnung veranschaulicht sind. In dieser zeigen
Fig. 1 eine perspektivische Ansicht eines Radiallüfters nach der Erfindung,
Fig. 2 einen schematischen Axialschnitt durch einen Radiallüfter nach der Erfindung,
Fig. 3 eine schematische Unteransicht eines Radiallüfters nach der Erfindung,
Fig. 4 bis Fig. 5 in einer geschnittenen Teilansicht zwei verschiedene Ausbildungen einer elektrisch leitenden Verbindung von dem elektrisch leitfähigen Anker zu einem Anschluss der Leiterplatte und
Fig. 7 bis 9 in schematischen Schaltbildern drei verschiedene Möglichkeiten der elektrischen Anbindung des Ankers an ein festes Potential.

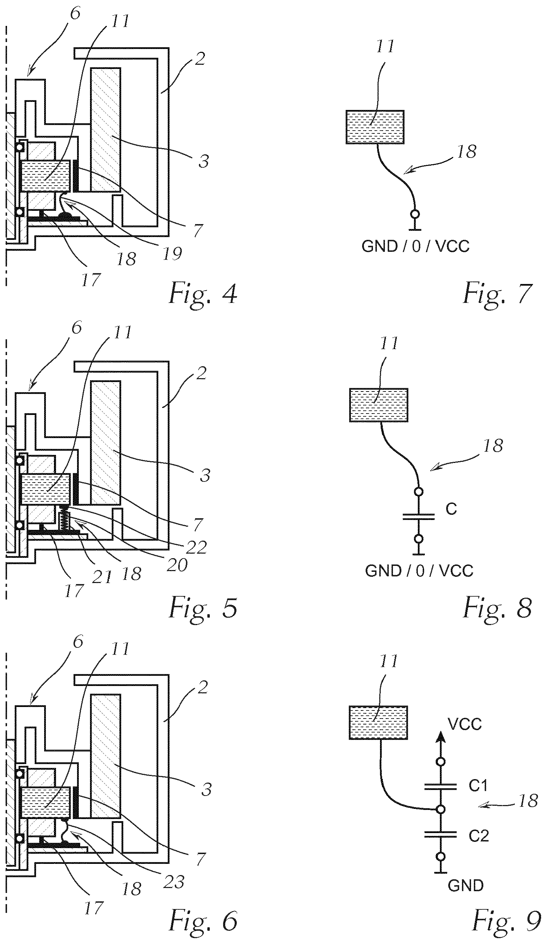

Fig. 6 zeigt in einer geschnittenen Teilansicht eine nicht zur Erfindung gehörende Ausbildung einer elektrisch leitenden Verbindung von dem elektrisch leitfähigen Anker zu einem Anschluss der Leiterplatte.

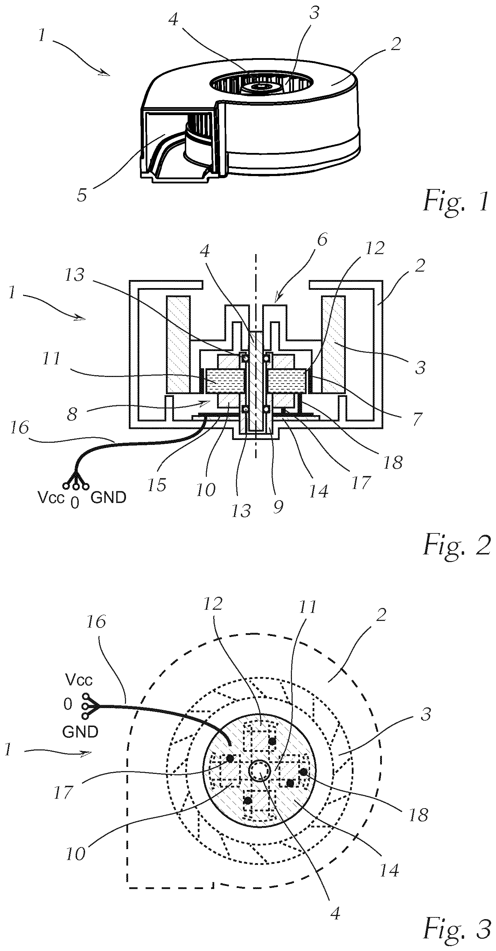

**Fig. 1** zeigt zunächst den äußeren Aufbau eines Radiallüfters **1** der gegenständlichen Art, wobei man ein Lüftergehäuse **2,** Lüfterschaufeln **3,** eine Rotorwelle **4** und eine Luftaustrittsöffnung **5** erkennt.

Der weitere Aufbau des Radiallüfters 1 geht nun aus den **Fig. 2** und **Fig. 3** hervor, welche zeigen, dass die Lüfterflügel 3 zu einem Rotor **6** gehören, der um die Rotorwelle 4 rotieren kann, und der an seinem inneren Umfang eine Anzahl von Permanentmagneten **7** besitzt.

Ein dem Rotor 6 zugeordneter Stator **8** ist mittels einer Statorhalterung **9** in dem Gehäuse 2 gehalten und er besitzt Statorwicklungen **10,** die auf einem mehrteiligen Anker **11** aus leitfähigen Blech, beispielsweise ein Blechlammellenpaket, angeordnet sind. Weiters weist der Stator mehrere, im vorliegenden Fall vier Polschuhe **12** auf, die mit den Permanentmagneten 7 des Rotors 6 zusammenwirken. Der Rotor 6 ist mit Hilfe von Lagern **13** in dem Stator 8 drehbar gelagert.

In Abstand von den Statorwicklungen 10 ist - in der Zeichnung unterhalb von diesen - eine Leiterplatte **14** vorgesehen, auf welcher bevorzugt die nicht näher beschriebene, dem Fachmann jedoch bekannte Ansteuerschaltung **15** für den Motor, nämlich für die Statorwicklungen 10, vorgesehen ist und welche über Anschlussleitungen **16** mit Massepotential **GND,** sowie den beiden Polen **0** und **V_{CC}** einer Betriebsspannung verbunden ist. Von der Leiterplatte 14 führen entsprechende Anschlüsse **17** zu den Statorwicklungen 10, wobei man in der Draufsicht der Fig. 3 erkennt, dass entsprechend der Anzahl der Polschuhe und der Ankerwicklungen bei diesem Beispiel vier Anschlüsse 17 vorhanden sind.

Die Erfindung sieht weiters vor, dass zumindest eine elektrisch leitende Verbindung **18** von dem elektrisch leitfähigen Anker 11 des Stators 8 zu zumindest einem, hier nicht näher gezeigten Anschluss der Leiterplatte 14 geführt ist und dieser Anschluss mit einem festen Potential verbunden ist. Dieses feste Potential kann das Massepotential GND oder auch einer der Pole 0 oder Vcc der Betriebsspannung sein.

Dank dieser Maßnahme lassen sich die durch die Ansteuerschaltung 15 in den Statorwicklungen 10 erzeugten und nach außen abgestrahlten elektromagnetischen Störungen erheblich reduzieren. Durch die Anbindung des im Inneren des Lüfters liegenden Ankers 11 an ein elektrisches Potential der Ansteuerschaltung 15 wird der Störstrom auf die Ansteuerschaltung 15 zurück geführt und die elektromagnetische Störaussendung der Motorwicklungen wird dadurch abgeschirmt.

An Hand der folgenden Figuren werden nun verschiedene Möglichkeiten der näheren Realisierung der Erfindung veranschaulicht.

**Fig. 4** zeigt die Ausbildung der elektrisch leitende Verbindung 18 als federndes Element, dessen eines Ende mit dem Anker 11 oder einem Anschluss der Leiterplatte 14 fest verbunden ist und dessen anderes Ende federn gegen einen Anschluss der Leiterplatte oder den Anker gepresst ist. Im gezeigten Beispiel ist das in der Zeichnung untere Ende der eine Blattfeder **19** umfassenden Verbindung 18 beispielsweise an ein nicht näher gezeigtes Lötauge angelötet und das andere, in der Zeichnung obere Ende, gegen den Anker 11 gepresst, um so die elektrische Verbindung zu einem festen Potential herzustellen. Diese Ausbildung ermöglicht einen raschen und einfachen Zusammenbau des Lüfters.

**Fig. 5** zeigt eine andere Möglichkeit der Ausgestaltung der elektrisch leitende Verbindung 18, die hier eine leitende Spiralfeder **20** aufweist, die auch in einer Hülse **21** geführt sein kann und deren eines Ende - in der Zeichnung das untere Ende - mit einem Anschluss an der Leiterplatte 14 fest verbunden ist, wobei das andere Ende mit einem Kontaktstück **22** gegen den Anker 11 gepresst ist.

In den beiden Fällen der Fig. 4 und 5 kann natürlich auch das jeweilige Federelement mit einem Ende mit dem Anker 11 fest verbunden sein, wobei das andere Ende federnd gegen einen Kontakt auf der Leiterplatte 14 gedrückt wird.

**Fig. 6** veranschaulicht schematisch eine nicht zur Erfindung gehörende Ausführung, bei welcher die elektrisch leitende

Verbindung 18 von dem elektrisch leitfähigen Anker 11 des Stators 8 zu zumindest einem Anschluss der Leiterplatte 14 ein Drahtstück **23** umfasst, das mit seinen beiden Enden z.B. durch Löten fest mit dem Anker 11 bzw. einem Leiterabschnitt auf der Leiterplatte 14 verbunden ist. Eine solche Verbindung ist besonders zuverlässig.

In **Fig. 7** ist schematisch dargestellt, dass der Anker 11 über die elektrisch leitende Verbindung 18 direkt mit einem festen Potential, entweder GND oder 0 oder Vcc verbunden ist, wogegen gemäß **Fig. 8** die elektrisch leitende Verbindung 18 einen Kondensator **C** umfasst, über den sie mit einem festen Potential, entweder GND oder 0 oder Vcc verbunden ist.

**Fig. 9** zeigt eine Variante, bei welcher der Anker 11 über einen ersten Kondensator C1 mit dem Potential der Betriebsspannung Vcc und über einen zweiten Kondensator C2 mit Massepotential GND verbunden ist.

Die Fig. 8 und 9 veranschaulichen, dass der Begriff "elektrisch leitend" für die Verbindung 18 auch eine nur für Wechselstrom durchlässige Verbindung umfasst, die sich besonders empfiehlt, falls eine galvanische Trennung des Ankers von einem festen Potential gewünscht ist. Welche Verbindungsvariante angewendet werden soll, richtet sich nach der spezifischen Ausführung einerseits des Lüfters als solchen und anderseits nach der Ansteuerschaltung und der Quelle der Betriebsspannung, wobei die günstigste Verbindung 18 oft empirisch zu bestimmen sein wird.

Die Anmelderin hat die Störstrahlung eines handelsüblichen Radiallüfters der gegenständlichen Bauart mit einem Spektrumanalyzer über einen Frequenzbereich von 150 kHz bis 3 MHz gemessen und zwar mit und ohne die erfindungsgemäße Anbindung des Ankers an ein festes Potential und festgestellt, dass die Erfindung eine Verminderung der Störstrahlung von 10 bis 15 dB ergibt.

### Liste der Bezugszeichen

| | | | | | |
|---|---|---|---|---|---|
| 1 | Radiallüfter | 13 | Lager | C | Kondensator |
| 2 | Gehäuse | 14 | Leiterplatte | C1 | Kondensator |
| 3 | Lüfterschaufeln | 15 | Ansteuerschaltung | C2 | Kondensator |
| 4 | Rotorwelle | 16 | Anschlussleitungen | GND | Potential |
| 5 | Luftaustrittsöffnung | 17 | Anschlüsse | Vcc | Potential |
| 6 | Rotor | 18 | Verbindung | 0 | Potential |
| 7 | Permanentmagnete | 19 | Blattfeder | | |
| 8 | Stator | 20 | Spiralfeder | | |
| 9 | Statorhalterung | 21 | Hülse | | |
| 10 | Statorwicklungen | 22 | Kontaktstück | | |
| 11 | Anker | 23 | Drahtstück | | |
| 12 | Polschuhe | | | | |

## Patentansprüche

1. Radiallüfter (1) mit einem Außenläufermotor (6+8) und einem Gehäuse (2), welcher aufweist:
einen Stator (8) mit einem mehrere Polschuhe (12) und Statorwicklungen (10) umfassenden mehrteiligen Anker (11) aus leitfähigem Blech,
einen Rotor (6), welcher den Stator von außen umfasst und der Permanentmagnete (7) und außen liegenden Lüfterflügel (3) sowie eine in dem Stator drehbar gelagerte Rotorwelle (4) besitzt,
und eine in Abstand von den Statorwicklungen angeordnete Leiterplatte (14) vorgesehen ist, von welcher Anschlussleitungen von einer Betriebsspannung und Masse zu den Statorwicklungen führen,
wobei zumindest eine elektrisch leitende Verbindung (18) von dem elektrisch leitfähigen Anker (11) des Stators (8) zu zumindest einem Anschluss der Leiterplatte (14) geführt ist und dieser Anschluss mit einem festen Potential (GND, 0, Vcc) verbunden ist.
**dadurch gekennzeichnet, dass**
die elektrisch leitende Verbindung (18) als federndes Element (19, 20) ausgebildet ist, dessen eines Ende mit dem Anker (11) oder einem Anschluss der Leiterplatte (14) fest verbunden ist und dessen anderes Ende federnd gegen einen Anschluss der Leiterplatte oder den Anker gepresst ist.

2. Radiallüfter (1) nach Anspruch 1, **dadurch gekennzeichnet, dass** das federnde Element als Blattfeder (19) ausgebildet ist.

3. Radiallüfter (1) nach Anspruch 1, **dadurch gekennzeichnet, dass** das federnde Element als leitende Spiralfeder (20) ausgebildet ist.

4. Radiallüfter (1) nach einem der Ansprüche 1 bis 3, **dadurch gekennzeichnet, dass** das feste Potential Massepotential (GND) ist.

5. Radiallüfter (1) nach einem der Ansprüche 1 bis 3, **dadurch gekennzeichnet, dass** das feste Potential ein Pol (0, Vcc) der Betriebsspannung ist.

6. Radiallüfter (1) nach einem der Ansprüche 1 bis 5, **dadurch gekennzeichnet, dass** der elektrisch leitfähigen Anker (11) des Stators (8) über einen Kondensator (C, C1, C2) mit Massepotential (GND) und/oder einem Pol (0, Vcc) der Betriebsspannung verbunden ist.

7. Radiallüfter (1) nach einem der Ansprüche 1 bis 6, **dadurch gekennzeichnet, dass** der Rotor (6) und/oder das Gehäuse (2) zumindest abschnittsweise aus Kunststoff besteht.

## Claims

1. Radial fan (1) with an external rotor motor (6+8) and a housing (2), which has:
a stator (8) with a multi-part armature (11) of conductive sheet metal comprising a plurality of pole pieces (12) and stator windings (10),
a rotor (6) externally surrounding the stator and having permanent magnets (7) and externally located fan blades (3), and a rotor shaft (4) rotatably supported in the stator
and a printed circuit board (14) is provided which is arranged at a distance from the stator windings and from which connection lines lead from an operating voltage and ground to the stator windings,
at least one electrically conductive connection (18) being led from the electrically conductive armature (11) of the stator (8) to at least one terminal of the printed circuit board (14) and this terminal being connected to a fixed potential (GND, 0, VCC).
**characterized in that**
the electrically conductive connection (18) is designed as a resilient element (19, 20), one end of which is firmly connected to the armature (11) or a terminal of the printed circuit board (14) and the other end of which is pressed resiliently against a terminal of the printed circuit board or the armature.

2. Radial fan (1) according to claim 1, **characterized in that** the resilient element is designed as a leaf spring (19).

3. Radial fan (1) according to claim 1, **characterized in that** the resilient element is designed as a conductive spiral spring (20).

4. Radial fan (1) according to one of claims 1 to 3, **characterized in that** the fixed potential is ground potential (GND).

5. Radial fan (1) according to one of claims 1 to 3, **characterized in that** the fixed potential is a pole (0, VCC) of the operating voltage.

6. Radial fan (1) according to one of claims 1 to 5, **characterized in that** the electrically conductive armature (11) of the stator (8) is connected via a capacitor (C, C1, C2) to ground potential (GND) and/or a pole (0, VCC) of the operating voltage.

7. Radial fan (1) according to one of the claims 1 to 6, **characterized in that** the rotor (6) and/or the housing (2) consists at least in sections of plastic.

## Revendications

1. Ventilateur radial (1) avec un moteur à rotor extérieur (6+8) et un boîtier (2), qui présente :
un stator (8) avec un induit (11) en plusieurs parties en tôle conductrice comprenant plusieurs pièces polaires (12) et des enroulements statoriques (10),
un rotor (6) qui entoure le stator de l'extérieur et qui possède des aimants permanents (7) et des pales de ventilateur (3) situées à l'extérieur ainsi qu'un arbre de rotor (4) logé de manière rotative dans le stator,
et il est prévu une carte de circuit imprimé (14) disposée à distance des enroulements du stator, de laquelle partent des lignes de raccordement d'une tension de service et d'une masse vers les enroulements du stator,
au moins une liaison électriquement conductrice (18) étant amenée de l'induit électriquement conducteur (11) du stator (8) à au moins une connexion de la carte imprimée (14) et cette connexion étant reliée à un potentiel fixe (GND, 0, VCC).
**caractérisé en ce que**
la connexion électriquement conductrice (18) est réalisée sous la forme d'un élément élastique (19, 20) dont une extrémité est reliée de manière fixe à l'armature (11) ou à une connexion de la carte de circuit imprimé (14) et dont l'autre extrémité est pressée de manière élastique contre une connexion de la carte de circuit imprimé ou l'armature.

2. Ventilateur radial (1) selon la revendication 1, **caractérisé en ce que** l'élément élastique est conçu comme un ressort à lame (19).

3. Ventilateur radial (1) selon la revendication 1, **caractérisé en ce que** l'élément élastique est conçu comme un ressort spiral conducteur (20).

4. Ventilateur radial (1) selon l'une des revendications 1 à 3, **caractérisé en ce que** le potentiel fixe est le potentiel de masse (GND).

5. Ventilateur radial (1) selon l'une des revendications 1 à 3, **caractérisé en ce que** le potentiel fixe est un pôle (0, VCC) de la tension de fonctionnement.

6. Ventilateur radial (1) selon l'une des revendications 1 à 5, **caractérisé en ce que** l'armature électriquement conductrice (11) du stator (8) est reliée au potentiel de masse (GND) et/ou à un pôle (0, VCC) de la tension de service par l'intermédiaire d'un condensateur (C, C1, C2).

7. Ventilateur radial (1) selon l'une des revendications 1 à 6, **caractérisé en ce que** le rotor (6) et/ou le boîtier (2) est constitué au moins par sections de matière plastique.
